(19) Europäisches Patentamt
European Patent Office
Office européen des brevets

(11) EP 1 010 047 B1

(12) EUROPÄISCHE PATENTSCHRIFT

(45) Veröffentlichungstag und Bekanntmachung des Hinweises auf die Patenterteilung:
**13.06.2001 Patentblatt 2001/24**

(21) Anmeldenummer: **98951249.6**

(22) Anmeldetag: **01.09.1998**

(51) Int Cl.[7]: **G05D 1/03**

(86) Internationale Anmeldenummer:
**PCT/DE98/02567**

(87) Internationale Veröffentlichungsnummer:
**WO 99/12083 (11.03.1999 Gazette 1999/10)**

# (54) VERFAHREN ZUR ANDOCKPOSITIONIERUNG EINER AUTONOMEN MOBILEN EINHEIT UNTER VERWENDUNG EINES LEITSTRAHLES

METHOD FOR DOCKING AN AUTONOMOUS MOBILE UNIT WITH THE USE OF A LIGHT BEAM

PROCEDE DE POSITIONNEMENT POUR LA MISE A QUAI D'UNE UNITE MOBILE AUTONOME AVEC UTILISATION D'UN FAISCEAU DE GUIDAGE

(84) Benannte Vertragsstaaten:
**BE CH DE FR GB IT LI NL SE**

(30) Priorität: **01.09.1997 DE 19738163**

(43) Veröffentlichungstag der Anmeldung:
**21.06.2000 Patentblatt 2000/25**

(73) Patentinhaber: **SIEMENS AKTIENGESELLSCHAFT**
**80333 München (DE)**

(72) Erfinder:
- **BAUER, Rudolf**
  **D-85579 Neubiberg (DE)**
- **ZILLICH, Michael**
  **A-4531 Kematen/Krems (AT)**

(56) Entgegenhaltungen:
**EP-A- 0 307 381**
**WO-A-87/02484**
**WO-A-98/33103**
**DE-C- 4 421 805**
**DE-C- 19 521 358**
**FR-A- 2 045 198**
**FR-A- 2 495 797**
**US-A- 4 627 511**
**US-A- 4 679 152**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 010 047 B1

Printed by Jouve, 75001 PARIS (FR)

## Beschreibung

Die Erfindung bezieht sich ein Verfahren, mit welchem autonome mobile Einheiten in eine Parkposition gebracht werden können.

Autonome mobile Einheiten können beispielsweise in Büro-, Krankenhaus- oder Industrieumgebungen eingesetzt werden, um einfache Tätigkeiten, wie z. B. Transport-, Fernmanipulations-, oder Reinigungsaufgaben durchzuführen. Beim Einsatz solcher autonomen mobilen Roboter ist es beispielsweise wünschenswert, daß diese präzise Andocken können, um in einer Andockstation beispielsweise Waren zu übernehmen oder zu übergeben, einen Batteriewechsel durchzuführen, oder um bei einer Reinigungsmaschine beispielsweise das Reinigungsgerät auszutauschen. Ein weiter Andockfall kann eintreten, wenn die autonome mobile Einheit in eine Garage fahren soll, in welcher sie wartet, bis weitere Tätigkeitsanforderungen an sie gerichtet werden. Während dieser Wartezeit kann beispielsweise ein Akkumulator, der in der autonomen mobilen Einheit vorgesehen ist aufgeladen werden, oder es kann eine Selbstdiagnose des Gerätes vorgenommen werden.

Aus US Pat.-Nummer 4,679152 ist ein Navigationssystem zum Andocken eines mobilen Roboters an eine Andockstation bekannt.

Dieses Navigationssystem verwendet eine Kombination aus einem optischen Positionsermittlungssystem und einem akustischen Positionsermittlungssystem, mit welchen ieweils eine relative Position des mobilen Roboters zu der Andockeinheit bestimmt wird.

Ein Problem das beim Andocken solcher Einheiten auftritt besteht darin, daß das Gerät aus einer beliebigen Startkonfiguration in eine fest definierte Endposition verbracht werden muß. Bekannte autonome mobile Einheiten, wie sie beispielsweise im deutschen Patent P 44 21 805 beschrieben werden, orientieren sich mit Ultraschallsensoren und auf Basis von Odometriemessungen, die an einem Rad der Einheit vorgenommen werden. Während der Fahrt des Gerätes von einem Start- zu einem Zielpunkt summiert sich dabei der Konfigurationsfehler, hervorgerufen durch die Sensorungenauigkeiten bei der Odometriemessung und bei der Ultraschallentfernungsmessung auf, so daß bald keine genaue Orientierung mehr möglich ist, wenn keine Gegenmaßnahmen ergriffen werden. In dem zitierten Patent werden Gegenmaßnahmen in der Form ergriffen, daß unterschiedliche Tätigkeiten welche die autonome mobile Einheit durchzuführen hat, bewertet werden und dabei der Konfigurationsfehler überwacht wird. Falls ein zu großer Fehler auftritt werden Korrekturmaßnahmen eingeleitet.

Ein weiteres Problem besteht darin, daß die autonome mobile Einheit in einer Dockstation vorzugsweise in einer ganz bestimmten Drehorientierung und mit einer ganz bestimmten Außenseite an der Dockstation andocken soll. In der Regel weisen solche autonomen mobilen Einheiten jedoch eine Dreiradkinematik auf, was es ihnen nicht ermöglicht sich beliebig auf dem Untergrund fortzubewegen. Die Dreiradkinematik von autonomen mobilen Einheiten wird beispielsweise im deutschen Patent DE 195 21 358 C1 diskutiert. Dort wird damit der Schlupf ermittelt, der sich entlang eines geplanten Fahrweges einer solchen autonomen mobilen Einheit aufsummiert.

Das der Erfindung zugrundeliegende Problem besteht also darin, ein Verfahren anzugeben, mit dem eine autonome mobile Einheit in eine definierte Endlage in einer Andockstation gebracht werden kann.

Diese Aufgabe wird gemäß den Merkmalen des Patentanspruches 1 und gelöst. Weiterbildungen der Erfindung ergeben sich aus den abhängigen Ansprüchen.

Ein besonderer Vorteil des Verfahrens besteht darin, daß durch Anwendung eines schlitzförmigen senkrecht auf der Bewegungsunterlage der Einheit stehenden Lichtstrahles in Verbindung mit einem positionssensitiven Detektor für diesen Leitstrahl, der parallel zur Fahrfläche der Einheit angebracht ist, eine gute Orientierungshilfe in Form eines Leitstrahles zur Verfügung gestellt wird, mit der direkt ein Signal für eine Fahrwegsteuerung der Einheit zur Ansteuerung der Andockposition generiert werden kann.

Ein weiterer Vorteil des Verfahrens besteht darin, daß sie zwei Detektionsmittel für den Leitstrahl vorsieht, welche in einer Hauptannäherungsrichtung der Einheit hintereinander angeordnet sind, damit kann eine genauere Ausrichtung der Einheit in Bezug auf die Andockvorrichtung erzielt werden.

Ein weiterer Vorzug des Verfahrens besteht darin, daß es mit handelsüblichen positionssensitiven Detektoren eingesetzt werden kann.

Besonders vorteilhaft arbeitet eine autonome mobile Einheit mit einem Andockverfahren, bei dem sie anhand des ausgesendeten Leitstrahles ihre relative Konfiguration zur Andockvorrichtung bestimmt und anhand ihrer Dreiradkinematik ermittelt, ob sie aus dieser Konfiguration heraus die Andockvorrichtung gezielt erreichen kann, um dort andocken zu können. Falls dies nicht der Fall ist, entfernt sie sich selbständig davon und zentriert sich in Bezug auf die Andockvorrichtung. Dieses Verfahren hat den Vorteil, daß keinerlei Informationen über die Umgebung der Andockvorrichtung erforderlich sind und daß es einfach realisierbar ist.

Besonders vorteilhaft können beim erfindungsgemäßen Andockverfahren aber auch Kenntnisse über die Umgebung der Andockvorrichtung ausgenutzt werden, indem beispielsweise ein bekannter Abstand der Andockvorrichtung zu einer Seitenwand von der autonomen mobilen Einheit vermessen wird und daraus auf die Lage der Andockvorrichtung geschlossen wird. Mit einem zusätzlichen Entfernungsmeßsensor mit dem der Abstand zur Andockvorrichtung gemessen wird kann dann die genaue Lage der Einheit ermittelt werden und der Andockvorgang eingeleitet werden.

Besonders vorteilhaft wird beim erfindungsgemäßen Andockverfahren die Tatsache ausgenutzt, daß der Einheit ihr Positionsfehler bekannt ist und daß ihre Startkonfiguration, d. h. die Startposition und die Startdrehlage in Relation zur Position und Drehlage der Andockvorrichtung und des Leitstrahles ebenfalls bekannt sind, so kann die Einheit auf Basis des geschätzten Positionsfehlers genau den Ort ermitteln, an dem der Leitstrahl von den Sensoren noch nicht erfaßt wird. Dies hat den großen Vorteil, daß genau bekannt ist, in welcher Richtung der Leitstrahl zu suchen ist bzw. falls der Leitstrahl zu diesem Zeitpunkt schon auf die Detektoren fällt kann die Einheit damit ihre Positionsunsicherheit quer zum Leitstrahl minimieren.

Vorteilhaft wird in einer Weiterbildung des erfindungsgemäßen Andockverfahrens die Tatsache ausgenutzt, daß sich Bewegung der autonome mobilen Einheit in ihrer Startkonfiguration in eine Vorwärtsbewegung und eine Drehbewegung zerlegen läßt, so daß die Einheit in beengten Umgebungen nicht eine Schleife fahren muß, sondern Vorwärtsfahrt durchführen kann und anschließend eine Drehbewegung auf der Stelle ausführt, bzw. diesen Bewegungsvorgang in umgekehrter Reihenfolge ausführt, um in eine Startkonfiguration für den Andockvorgang zu gelangen.

Besonders vorteilhaft bewegt sich in einer Weiterbildung des erfindungsgemäßen Verfahrens die Einheit vorwärts oder rückwärts zu ihrer Startposition, da auf diese Weise die örtlichen Gegebenheiten besser ausgenutzt werden können, d. h. die Einheit nicht unbedingt auf der Stelle wenden muß, sondern erst in der Startposition wenden kann und ebenfalls die Möglichkeit besteht, daß die Einheit immer den direktesten Weg zur Startposition fährt.

Besonders vorteilhaft legt die Einheit in einer weiteren Weiterbildung des erfindungsgemäßen Verfahrens ihre Position anhand der bekannten Position des Leitstrahles neu fest, nachdem dieser durch die Detektoren festgestellt wurde. Hierbei ist zu beachten, daß sowohl die Einheit den Leitstrahl aussenden kann, als auch die Andockvorrichtung und das für den Fall, daß die Andockvorrichtung den Leitstrahl nicht aussendet das Detektorenergebnis per Funk oder Infrarotübertragung an den Steuerrechner der Einheit übertragen werden muß, so daß es für die Anwendung der Erfindung nicht erforderlich ist, den Leitstrahl lediglich an der Andockvorrichtung vorzusehen.

Besonders vorteilhaft wird in einer weiteren Weiterbildung des erfindungsgemäßen Verfahrens der Leitstrahl durch die Einheit derartig gesucht, daß diese versucht, die vermeintliche Position bzw. den vermeintlichen Verlauf des Leitstrahles mehrfach zu kreuzen.

Vorteilhaft bewegt sich die autonome mobile Einheit in einer Weiterbildung des erfindungsgemäßen Verfahrens auf einem mäanderförmigen Pfad, welcher den gedachten Verlauf des Leitstrahles mehrfach kreuzt.

Besonders vorteilhaft wird in einer Weiterbildung des erfindungsgemäßen Verfahrens die Mäanderform des Suchpfades zur Suche des Leitstrahles variiert, indem der Abstand der Wendepunkte zur Abfahrt des meanderförmigen Suchpfades vom gedachten Leitstrahl vergrößert bzw. verringert wird, da damit der Suchbereich zum Auffinden des Leitstrahles sukzessive vergrößert wird.

Vorteilhaft wird in einer weiteren Weiterbildung des erfindungsgemäßen Verfahrens der Leitstrahl gesucht, indem die autonome mobile Einheit versucht, den gedachten Verlauf des Leitstrahles von einer Seite zu kreuzen, dann versucht ihn von der anderen Seite zu kreuzen, wobei sie dazwischen zunächst ein Stück prallel verfährt um wieder in eine Ausgangsposition zu gelangen, welche in einer ähnlichen Entfernung zur Andockvorrichtung liegt, wie zu Beginn des Suchvorganges.

Vorteilhaft wird in einer weiteren Weiterbildung des erfindungsgemäßen Verfahrens der Leitstrahl gesucht, indem in einem zickzackförmigen Kurs parallel im wesentlichen im selben Abstand von der Andockvorrichtung quer zum Leitstrahl verfahren wird, wobei die Einheit so ausgerichtet ist, daß der Detektor und der Leitstrahl bei Vorwärts- und Rückwärtsfahrt zusammenwirken können, d. h. es finden keine Wendemanöver auf dem Zickzackkurs statt. Dies hat den Vorteil, daß auf einer geringen Fahrstrecke ein großer Breitenbereich abgedeckt werden kann und daß der Leitstrahl auf diese Weise sicher gefunden wird bzw. die Andockvorrichtung auf diese Weise sicher lokalisiert werden kann.

Besonders vorteilhaft bewegt sich die autonome mobile Einheit in einer Weiterbildung des erfindungsgemäßen Verfahrens nachdem der Leitstrahl detektiert wurde entlang dem Leitstrahl auf die Andockvorrichtung zu.

Im folgenden werden Ausführungsbeispiele Erfindung anhand von Figuren weiter erläutert. Dabei werden die Begriffe "autonome mobile Einheit" und "Roboter" synonym gebraucht, was sich in keiner Weise einschränkend auf den Gegenstand der Erfindung auswirken soll.

| | |
|---|---|
| Fig. 1 | zeigt eine autonome mobile Einheit bei einem Andockvorgang. |
| Fig. 2 | gibt Beispiele für verwendete Koordinatensysteme an. |
| Fig. 3 | zeigt ein Ausführungsbeispiel einer erfindungsgemäßen Andockvorrichtung. |
| Fig. 4 | erläutert beispielhaft die geometrischen Zusammenhänge bei der erfindungsgemäßen Andockvorrichtung. |
| Fig. 5 | zeigt ein Beispiel zur Bestimmung der Startkonfiguration; |
| Fig. 6 | veranschaulicht die Fahrt zur Startkonfiguration; |
| Fig. 7 | veranschaulicht die Positionsbestimmungen anhand des Leitstrahles; |

Fig. 8 veranschaulicht die Auswertung der Sensordaten, zur Detektion des Leitstrahles;
Fig. 9 bis 11 zeigen ein Suchverfahren zur Lokalisierung der Andockvorrichtung;
Fig. 14 veranschaulicht ein Ablaufdiagramm.

Wie die Figuren 1 und 2 zeigen weist eine autonome mobile Einheit mit Dreiradkinematik beispielsweise ein Steuerrad ST und Antriebsräder A1 und A2 auf. Die autonome mobile Einheit AE befindet sich in ihrer Andockposition an einer Andockvorrichtung AV, welche beispielsweise Transportrollen TR zur Übergabe oder Entgegennahme von Transportgut aufweist, in einer Ruhelage im Schnittpunkt des Achsenkreuzes xy. In einer beliebigen Drehlage in der Nähe der Andockvorrichtung AV befindet sich die autonome mobile Einheit beispielsweise in einer Konfiguration P(x, y,beta) mit einem Verdrehwinkel beta ihrer Hauptannäherungsrichtung HA an die Andockvorrichtung AV gegenüber der x-Achse. Falls die autonome mobile Einheit nach einer Fahrt von mehreren Metern Länge an der Andockvorrichtung andocken soll, so kann es durchaus sein, daß der Fehler in der Eigenkonfigurationsschätzung 20 cm und der Orientierungsfehler bis zu 5° beträgt. Es besteht also das Problem, daß dieser mögliche Positionierungsfehler relativ zur Andockvorrichtung AV ausgeglichen werden muß. Die Einheit muß daher während des Andockens ihre Position relativ zur Andockvorrichtung genau bestimmen. Hierzu sind Sensoren notwendig die eine Positionsbestimmung relativ zur Andockvorrichtung ermöglichen. Während sich die Einheit auf ihrer Fahrt und bei der Verrichtung ihrer Tätigkeiten beispielsweise mit Ultraschallsensoren und auf Basis von Odometriemessungen in der Umgebung orientiert, reicht diese Vorgehensweise nicht aus, um sie präzise an einer Andockvorrichtung andocken zu lassen. Hierzu ist eine spezielle Andockvorrichtung und ein gezieltes Andockverfahren erforderlich. Wie sich die Einheit innerhalb ihrer Umgebung orientiert und wie sie Tätigkeiten verrichtet und bewertet kann dem eingangs geschilderten Stand der Technik entnommen werden. Ein weiteres Problem das beim Andockvorgang auftritt besteht darin, daß die Einheit AE bedingt durch ihre Dreiradkinematik nicht beliebig manövrierbar ist. Falls in unmittelbarer Nähe der Andockvorrichtung AV die autonome mobile Einheit AE einen seitlichen Versatz aufweist, so ist dieser seitliche Versatz nicht durch Manövriermaßnahmen bei gleichzeitiger Annäherung an die Andockvorrichtung korrigierbar. Es ist deshalb vorgesehen, daß falls ein solcher Fall eintritt, sich die Einheit wieder von der Andockvorrichtung fortbewegt, wobei sie sich in Bezug auf die Andockvorrichtung zentriert, um bei einem nächsten Annäherungsvorgang an eine Dockposition die gewünschte Endkonfiguration erreichen zu können. Vorzugsweise ist der Fahrweg zur Andockposition schon aus ausreichender Entfernung von der Andockvorrichtung vorausplanbar, indem die Dreiradkinematik und die Planungsalgorithmen aus dem zitierten Stand der Technik benutzt werden. Zusätzlich werden zur Auffindung des Leitstrahles gezielte Plazierungs- und Fahrstrategieen eingestetzt.

Wie Fig. 2 veranschaulicht, werden bei erfindungsgemäßen Verfahren beispielsweise unterschiedliche Koordinatensysteme y_w, x_w, x_r, y_r bzw. x_l, y_l verwendet. Durch sie werden unterschiedliche Positionen im lokalen, d. h. im Radkoordinatensystem der autonome mobilen Einheit AE bzw. im lokalen Koordinatensystem der Andockvorrichtung AV mit x_d und y_d, bzw. deren Lichtquelle LQ mit x_l, y_l angedeutet. Der Leitstrahl ist hier mit BEA bezeichnet. In diesem Beispiel ist die Sensoreinheit SE aus positionsempfindlichen Detektoren PSD1 und PSD2 aufgebaut, aus deren Messergebnissen und ihrem Abstand unter Anwendung trigonometrischer Funktionen der Winkel einfallender Lichtstrahlen ermittelt werden kann. Das Andockverfahren setzt sich dabei aus mehreren Elementen zusammen

- Bestimmung der Startkonfiguration
- Fahrt zur Startkonfiguration
- Positionsbestimmung
- Leitstrahl suchen
- Andockvorgang
- Verhalten bei Hindernissen

Jedes an der Berechnung beteiligte Objekt hat eine bestimmte Konfiguration (relativ zu einem anderen Objekt, relativ zur Welt). Jede dieser Konfigurationen bildet ein Koordinatensystem.
Notation:

$x_a,y_a$ Punkt dargestellt im Koordinatensystem a
$\beta_a$ Winkel dargestellt im Koordinatensystem a $(x_a,y_a,\beta_a)_b$ oder $(x,y,\beta)_{a,b}$ Koordinatensystem (Konfiguration) a dargestellt im (d.h. relativ zu Koordinatensystem) b (keine Angabe von b bedeutet relativ zum Welt-Koordinatensystem)

Bei den Berechnungen sind folgende Koordinatensysteme gegeben:

- $(x,y,\beta)_w$ Welt-Koordinatensystem (implizit)
- $(x,y,\beta)_{r,w}$ Roboter-Koordinatensystem, relativ zu Welt-Koordinatensystem

- $(x,y,\beta)_{s,r}$ Sensoreinheit-Koordinatensystem, relativ zu Roboter-Koordinatensystem
- $(x,y,\beta)_{d,w}$ Dockingstation-Koordinatensystem, relativ zum Welt-Koordinatensystem
- $(x,y,\beta)_{l,d}$ Leitstrahl-Koordinatensystem, relativ zum Dokkingstation-Koordinatensystem

Daraus lassen sich berechnen:

- $(x,y,\beta)_{s,w}$ Sensoreinheit-Koordinatensystem, relativ zum Welt-Koordinatensystem
- $(x,y,\beta)_{l,w}$ Leitstrahl-Koordinatensystem, relativ zum Welt-Koordinatensystem

Wie Figur 3 zeigt, weist in diesem Ausführungsbeispiel die Andockvorrichtung AV eine Lichtquelle LQ auf deren Licht durch eine Zylinderlinse LS oder durch eine Schlitzblende zu einem fächerförmigen Leitstrahl BEA aufgefächert wird, der senkrecht auf eine Fahrfläche FF der autonomen mobilen Einheit AE steht. Weiterhin ist an der Andockvorrichtung AV beispielsweise ein Infrarotempfänger IRE vorgesehen, der für den Fall das er ein Signal empfängt, die Lichtquelle LQ aktivieren kann. Als Lichtquelle LQ können bevorzugt scharf bündelnde Laser bzw. Infrarotlaser eingesetzt werden. Es sind jedoch auch andere Formen von Lichtquellen, die einen fächerförmigen Leitstrahl erlauben denkbar. Die in Figur 3 gezeigte autonome mobile Einheit weist beispielsweise einen positionsempfindlichen Detektor PSD1 und einen positionsempfindlichen Detektor PSD2 auf, welche um eine höhere Positionsauflösung zu erzielen bevorzugt linear senkrecht zu und parallel zur Fahrfläche der Einheit angeordnet sind und welche eine genaue Detektion der Position des fächerförmigen Leitstrahles BEA erlauben, wie dies noch in Figur 4 gezeigt werden wird. Beispielsweise ist an der autonomen mobilen Einheit ein Filter FL vorgesehen, der lediglich Licht im Frequenzbereich der Lichtquelle LQ durchläßt, damit Störungen durch Fremdlicht unterbunden werden können. Weiterhin ist beispielsweise ist an der autonomen mobilen Einheit eine Steuereinrichtung ST vorgesehen, welche über Datenleitungen DL vom positionssensitiven Detektor PSD1 beispielsweise Stromsignale und vom positionssensitiven Detektor PSD2 beispielsweise Stromsignale erhält. Auf Basis dieser Stromsignale kann, wie Figur 4 weiter zeigen wird, die Drehlage der Einheit relativ zur Lichtquelle LQ bzw. zum fächerförmigen Leitstrahl BEA ermittelt werden. Zusätzlich weist die Einheit beispielsweise einen Infrarotsender IRS auf, welcher mit dem an der Andockvorrichtung AV vorgesehenem Infrarotempfänger IRE kommunizieren kann, um die Lichtquelle LQ bei einer Annäherung der autonomen mobilen Einheit AE an die Andockvorrichtung AV einzuschalten. Obwohl die hier gezeigte Version einer Andockvorrichtung die sinnvollste Ausführungsform darstellt, bei der die Auswertermittel in der autonomen mobilen Einheit vorgesehen sind, welche diese ebenfalls für ihre Steuervorgänge benötigt, kann es auch fallweise sinnvoll sein die Lichtquelle in der Einheit vorzusehen und die Auswertemittel für die Positionsbestimmung in der Andockvorrichtung vorzusehen und mittels Infrarotsender und -empfänger oder anderer Übertragungsmittel die Daten an die Einheit zu übermitteln. Vorzugsweise ist der Leitstrahl senkrecht zur Unterlage also zur Fahrfläche der Einheit FF aufgefächert, damit ein Beladungszustand der Einheit, der bewirkt daß die positionssensitiven Detektoren PSD1 und PSD2 ihre Höhenlage in Relation zur Fahrfläche verändern, nicht dazu führt, daß ein Andockvorgang unausführbar wird. Vorzugsweise wird der Leitstrahl bzw. der Laserstrahl gepulst, damit eine genaue Unterscheidung vom Umgebungslicht durchgeführt werden kann. Beispielsweise ist in der Steuerung ST eine Auswerteelektronik für die positionsensitiven Detektoren PSD1 und PSD2 vorgesehen, welche sich beispielsweise mit der Pulsfrequenz des Lasers aufsynchronisiert. Anstatt von positionssensitiven Detektoren, welche handelsüblich erwerbbar sind, können jedoch auch Fotodioden vorgesehen sein, die eine geringere Auflösung ermöglichen, welche aber fallweise für einen Andockvorgang ausreicht.

Wie Figur 4 zeigt sind die beiden positionssensitiven Detektoren oder fallweise auch zwei Linien von Fotodioden bezüglich einer Hauptannäherungsrichtung H der autonomen mobilen Einheit an die Andockvorrichtung hintereinander in einem Abstand d voneinander angeordnet. Die Darstellung in Figur 4 zeigt eine Draufsicht auf die Fahrfläche FF. Der von der Lichtquelle LQ ausgesendete Leitstrahl BEA passiert beispielsweise einen Filter FL und trifft zunächst auf den positionssensitiven Detektor PSD1 und danach auf dem positionsensitiven Detektor PSD2. Die beiden positionssensitiven Detektoren PSD1 und PSD2 weisen in diesem Fall eine Länge L auf. In Figur 4 stellt die Hauptannäherungsrichtung H gleichzeitig die Symmetrieachse der beiden Detektoren PSD1 und PSD2 dar deshalb läßt sich aus den gemessenen Entfernungen Y1 und Y2 des Leitstrahles BEA von der Hauptannäherungsrichtung HA beim Auftreffen auf die Detektoren PSD1 und PSD2 der Winkel beta als Verdrehung der autonomen mobilen Einheit unter Zuhilfenahme des Abstandes d der Detektoren bestimmen. Wie bereits zuvor erwähnt geben die positionssensitiven Detektoren beispielsweise einen Strom I1 und I2 bzw. I3 und I4 ab. y1 und y2 lassen sich daraus gemäß folgender Formeln bestimmen

$$y_1 = \frac{L}{2} \cdot \frac{I_1 - I_2}{I_1 + I_2} \qquad (1)$$

$$y_2 = \frac{L}{2} \cdot \frac{I_3 - I_4}{I_3 + I_4} \quad (2)$$

beta ergibt sich daraus zu

$$beta = \text{are } \tan((y1 - y2)/d) \quad (3)$$

Bei der erfindungsgemäßen Anordnung ist vorzugsweise ein Filter FL vorgesehen um die Einflüsse von Fremdlicht zu minimieren und eine genauere Ortsbestimmung des Leitstrahls BEA durchführen zu können. Vorzugsweise ist eine Verstärkerelektronik vorgesehen, welche die Signale der Detektoren PSD1 und PSD2 aufbereitet. Hier wird beispielsweise zunächst überprüft ob gepulstes Laserlicht vorhanden ist und falls dies der Fall ist werden die entsprechenden Entfernungen y1 und y2 aus den von den Detektoren abgegebenen Stromsignalen bestimmt. Beispielsweise weist die Verstärkerelektronik in der Steuereinheit ST eine Logikvorrichtung auf, welche auswertet, ob auf beide positionssensitiven Detektoren gepulstes Laserlicht auftrifft. Falls dies der Fall ist, werden die entsprechenden Signale an einen Analogdigitalwandler weitergeleitet welcher beispielsweise das Winkelsignal für beta einem Robotersteuerprogramm in Form eines digitalen Wertes zur Verfügung stellt. Mit dem so bestimmten Winkel beta kann die autonome mobile Einheit bzw. deren Steuerprogramm einen Fahrweg planen, der sie genau ins Ziel führt.

Wie Fig. 5 zeigt, muß die autonome mobile Einheit AE von einer Ausgangsposition 1A mit einer Positionsunsicherheit PU in eine Startposition 1B gelangen, um mit der Suche des Leitstrahls BEA, der von einer Lichtquelle LQ ausgeht, beginnen zu können. Zur Bestimmung der Startkonfiguration beim Anfahren der Andockvorrichtung kann der Roboter von einer beliebigen Richtung kommen, wobei die Positionsschätzung eine bestimmte Unsicherheit besitzt. Es ist davon auszugehen, daß der Leitstrahl - infolge der Positionsunsicherheit - zunächst nicht vom PSD-Sensor erfaßt werden kann.

Die Startkonfiguration $Ks=(x_start,y_start,0)_1$ wird vorzugsweise so bestimmt, daß sich der Roboter mindestens 1 m (x start = 100) vor der Andockvorrichtung und einige Zentimeter (y_start = 10) versetzt vom Leitstrahl befindet. Mit einem nachfolgendem Suchmanöver soll dann der Leitstrahl schnell gefunden werden. In Figur 5 soll der Leitstrahl beispielsweise nach rechts gesucht werden.

Wie Fig. 6 zeigt, können verschiedene Konfigurationen KE, K2 und K3 ausgehend von einer Ausgangskonfiguration KA auf unterschiedlichen Pfaden W1, bzw. W2 erreicht werden. W1 veranschaulicht dabei den Pfad, welcher unter Verwendung eines herkömmlichen Reglers gefahren würde. Deutlich ist dabei erkennbar, daß sich eine weite Schleife ergibt, wenn die Einheit versucht vorwärts in ihre Zielkonfiguration zu gelangen. Für den Fall, daß beengte räumliche Gegebenheiten vorliegen, wie beispielsweise auf einem engen Flur, ist diese Fahrweise nicht möglich und erfindungsgemäß wird eine andere Fahrweise vorgeschlagen, bei der die Einheit zunächst vorwärts den Weg W2 fährt und dann in P1 auf der Stelle dreht. Das exakte Anfahren der Startkonfiguration stellt das erste größere Problem dar. Ein einfacher Konfigurationsregler funktioniert gut, wenn sich die Zielkonfiguration direkt vor bzw. hinter dem Roboter befindet, und die Zielorientierung nicht allzu weit von der Startorientierung abweicht, d.h. wenn sich, wie in Figur 6 dargestellt

a) die Roboterorientierungen von Ka und Ke nur um einen maximalen Winkel (z.B. 40°) unterscheiden (beispielsweise K2)
b) die Endkonfiguration innerhalb eines Sektors [-beta, +beta] vor bzw. hinter der Anfangskonfiguration befindet.

Ein solcher Regler kann beispielsweise nach folgendem Schema arbeiten:
Das Regelgesetz lautet:

$$v = k_\rho * \rho$$

$$\omega = k_\alpha * \alpha + K_\phi * \phi$$

wobei $\nu$ die Geschwindigkeit in Fahrtrichtung und $\omega$ die Änderung der Fahrtrichtung (Winkelgeschwindigkeit) bedeuten. Weiters bedeuten $\rho$ den Abstand der aktuellen Konfiguration zur Zielkonfiguration, $\phi$ den Winkel zwischen aktueller und Zielkonfiguration und $\alpha$ den Winkel zwischen aktueller Fahrtrichtung und Zielrichtung.

Die Zielkonfiguration Ke in Figur 6 verletzt beispielsweise die Bedingung a). Der herkömmliche Regler würde den Weg W1 fahren, der viel frei befahrbaren Umgebungsplatz beansprucht. Häufig ist in der Praxis aber der Bewegungsspielraum der Einheit durch Wände eingeschränkt. Im Rahmen der Erfindung wurde deshalb folgendes Verfahren entworfen, welches gut funktioniert.
Handelt es sich bei Ke um eine sog. "schwierige Endkonfiguration" (Bedingung a und/oder b verletzt) werden zwei Zwischenzielpunkte P1 und P2 so bestimmt, daß sie sich auf einer Linie zur Endkonfiguration befinden und sich jeweils eine bestimmte Distanz d (ça. 50cm) vor bzw. hinter der Endkonfiguration befinden.

$$P1.x = Ke.x + d \cdot \cos(Ke.beta)$$

$$P1.y = Ke.y + d \cdot \sin(Ke.beta)$$

$$P2.x = Ke.x - d \cdot \cos(Ke.beta)$$

$$P2.y = Ke.y - d \cdot \sin(Ke.beta)$$

Daraufhin werden die Entfernungen d1 und d2 zu den beiden möglichen Zwischenpunkten bestimmt.

$$d1 = \sqrt{(P1.x - Ka.x)^2 + (P1.y - Ka.y)^2}$$

$$d2 = \sqrt{(P2.x - Ka.x)^2 + (P2.y - Ka.y)^2}$$

Beim nun folgenden Fahrmanöver wird bevorzugt zunächst mit beliebiger Orientierung derjenige Punkt angefahren, der näher an der Anfangskonfiguration liegt. Dies ist P1 in Figur 6, wo der Roboter Konfiguration K2 erreicht. Ist der Punkt erreicht, dreht sich der Roboter solange auf der Stelle, hier von K2 nach K3, bis er die gleiche Drehlage, wie die Endkonfiguration sie fordert erreicht hat.
Das exakte geregelte Anfahren der Endkonfiguration ist nun relativ einfach, da der Roboter nur noch eine gewisse Distanz vorwärts bzw. rückwärts fahren muß, hier von K3 rückwärts zu Ke. Blockiert beispielsweise ein Hindernis die Fahrt zum näheren Punkt P1 ist es vorgesehen, zunächst den weiter entfernt liegenden Punkt P2 anzufahren und anschließend die Endkonfiguration anzufahren.
Für die einfacheren Fahrmanöver reicht die Qualität des oben beschriebenen Reglers aus. Durch das beschriebene Verfahren wird es dem Roboter ermöglicht, von einer Startkonfiguration aus, eine beliebige Endkonfiguration ohne große Ausholbewegungen anzufahren. Der benötigte Platz zum Manövrieren wird möglichst klein gehalten.
Wie Fig. 7 zeigt, kann die Einheit AE anhand einer Lichtquelle LQ und eines Strahls BEA, welcher von der Lichtquelle abgegeben wird, ihre eigene Position bestimmen. Hat der Roboter die Startkonfiguration erreicht, erfolgt die kontinuierliche Positionsbestimmung - die normalerweise nur im Weltkoordinatensystem $(x,y,\beta)_{r,w}$erfolgt - zusätzlich noch im Leitstrahl-Koordinatensystem $(x,y,\beta)_{r,l}$. Für das gesamte Docking-Manöver wird nur noch die Roboterkonfiguration im Leitstrahl-Koordinatensystem verwendet $(x,y,\beta)_{r,l}$.
Zuerst ist es notwendig die aktuelle Roboterkonfiguration und die Odometriedaten $(dx,dy,d\beta)$ des Roboters von Welt-Koordinaten in Leitstrahl-Koordinaten zu transformieren:

$$(x_{alt}, y_{alt}, \beta_{alt})_{r,w} \rightarrow (x_{alt}, y_{alt}, \beta_{alt})_{r,l}$$

$$dx_w, dy_w, d\beta_w \rightarrow dx_l, dy_l, d\beta_l$$

Bei der Positionsbestimmung wird bevorzugt wie folgt vorgegangen:

1.) Wird der Leitstrahl von keinem der beiden PSD-Sensoren in der PSD-Sensoreinheit erfaßt, erfolgt die Positionsbestimmung vorzugsweise ausschließlich mit Odometrieinformationen anhand folgender Gleichungen

$$x_{k+l} = x_k + dx_l = x_k + \frac{u_{r_k} + u_{l_k}}{2}\cos(\beta_k)$$

$$y_{k+l} = y_k + dy_l = y_k + \frac{u_{r_k} + u_{l_k}}{2}\sin(\beta_k) \quad (4)$$

$$\beta_{k+l} = \beta_k + d\beta_l = \beta_k + \frac{u_{r_k} - u_{l_k}}{2W_s}$$

wobei mit $W_s$ die halbe Spurweite und mit $u_{rk}$ und $u_{lk}$ die Bewegungsänderungen an den beiden Rädern bezeichnet werden. Der Index *k* kennzeichnet den diskreten Zustand.

2.) Wird der Leitstrahl bzw. Lichtstrahl nur von einem der beiden PSD-Sensoren PSD1 sicher erfaßt, erfolgt nur die Bestimmung der Position des Roboters normal zum Leitstrahl $y_l$ über die yl-Position, dem Lichtauftreffpunkt auf PSD1. Die Bestimmung der Roboterorientierung $\beta_l$ und die translatorische Bewegung entlang des Leitstrahls $x_1$ wird weiterhin über die Radbewegungen erfaßt.

$$x_{k+l} = x_k + dx_l$$

$$y_{k+l} = y_k + y_{r,l,neu} = y1 \cdot \cos(\beta_l) - D1 \cdot \sin(\beta_l) \quad (5)$$

$$\beta_{k+}l = \beta_k + d\beta_l$$

3.) Wird der Leitstrahl von den beiden PSD-Sensoren sicher erfaßt, erfolgt die Bestimmung der Orientierung $\beta_l$ und der Position des Roboters normal zum Leitstrahl $y_l$ vorzugsweise ausschließlich über die PSD-Daten. Die translatorische Bewegung entlang des Leitstrahls $x_l$ wird weiterhin über die Radbewegungen erfaßt.

$$x_{k+l} = x_{r,l,alt} + dx$$

$$_{yk+l} = y_{r,l,neu} \quad \text{(von PSD - Sensor)} \quad (6)$$

$$\beta_{k+l} = \beta_{r,l,neu} \quad \text{(von PSD - Sensor)}$$

Fig. 8 veranschaulicht die geometrischen Gegebenheiten bei der Auswertung der Sensordaten von den positionsempfindlichen Detektoren PSD1 und PSD2.
Durch Auswerten der PSD-Daten werden aus $y_1$ und $y_2$, $y_{r.l.neu}$ und $\beta_{r,l,neu}$ berechnet.
Der Auftreffwinkel des Leitstrahls auf die PSD-Sensoren ist:

$$\alpha = \arctan\left(\frac{y_1 - y_2}{d}\right)$$

Hierzu wird $\pi$ addiert, weil der Leitstrahl als Vektor modelliert wird, der von der Lichtquelle wegzeigt:

$$\beta = \alpha + \pi$$

$\beta$ ist nun die Richtung des Leitstrahls im Sensoreinheit-Koordinatensystem. Um zur Richtung des Leitstrahls in Roboter-Koordinaten zu gelangen muß β noch in Roboter-Koordinaten transformiert werden:

$$\beta \rightarrow \gamma$$

$$\gamma = \beta + \beta_{s,r}$$

In Figur 8 ist $\beta_{s,r}$ - also die Verdrehung des Sensoreinheit-Koordinatensystems zum Roboter- Koordinatensystem - genau $\pi$ *;* dies wird i.a. der Fall sein, da ja der Roboter üblicherweise rückwärts entlang des Leitstrahls fahrend andockt und der Sensorkopf somit nach hinten gerichtet ist. Es wären aber auch andere Konfigurationen denkbar, wenn z.B. der Roboter seitwärts fahren könnte.
$\gamma$ ist jetzt die Richtung des Leitstrahls in Roboterkoordinaten, also ist $-\gamma$ die Richtung (=Orientierung) des Roboters in Leitstrahl-Koordinaten. Somit ist

$$\beta_{r,l,neu} = -\gamma \qquad (7)$$

gefunden.
Um zu $y_{r,l}$ zu gelangen, werden folgende Vektoren gebildet:

- $\vec{a}$ Vektor vom Roboter-Koordinatensystem-Ursprung zum Auftreffpunkt des Leitstrahls auf PSD Sensor 2, in Roboter-Koordinaten
- $\vec{b}$ Einheitsvektor in Richtung Leitstrahl, in Roboter-Koordinaten
- $\vec{c}$ Normalvektor auf $\vec{b}$, um +90° gedreht

Der Abstand des Leitstrahls vom Roboter-Koordinatensystem-Ursprung ergibt sich nun einfach als Skalarprodukt von $\vec{a}$ und $\vec{c}$, und somit der Abstand des Roboter-Koordinatensystem-Ursprungs vom Leitstrahl (=$y_{r,l}$) zu

$$y_{r,l} = -\vec{a}.\vec{c} \qquad (8)$$

Figur 8 zeigt: $\vec{a}.\vec{c}$ ist negativ, der Roboter-Koordinatensystem-Ursprung liegt über dem Leitstrahl, also ist $y_{r.l}$ positiv.

Der Positionsfehler vor dem Andockvorgang ist in der Praxis häufig größer als die Abmessungen der PSD Sensoren, also muß der Roboter durch geeignetes Manövrieren die Sensoren in den Strahl bringen. Hierzu werden, sobald die Startposition erreicht ist, geeignete Suchpositionen berechnet und dann der Reihe nach angefahren. Zu beachten ist hierbei, daß der zulässige Einfallswinkel des Leitstrahls auf die Sensoren beschränkt sein kann (z. B. auf ±8°: Aufgrund eines Interferenzfilters vor den PSD Sensoren werden zu flach einfallende Strahlen wegreflektiert). Die Suchpositionen müssen also entsprechend gewählt werden. Die folgenden Suchstrategien sind vorteilhaft, denn sie haben sich experimentell bewährt.

Fig. 9 zeigt einen Suchpfad zur Lokalisierung einer Andockvorrichtung, welche einen Leitstrahl BEA aus einer Lichtquelle LQ abgibt. Die autonome Einheit AE verfährt zu diesem Zeitpunkt auf einem Suchpfad P, welcher den gedachten Verlauf des Leitstrahles BEA mehrfach kreuzt. Der Roboter durchfährt in Figur 9 das Suchgebiet einmal nach links-rückwärts zu Punkt 1 und einmal nach rechts-rückwärts zu Punkt 3. Zwischen Punkt 1 und 2 bewegt er sich vorwärts. Wird der Leitstrahl bei Erreichen des Punktes 3 nicht gefunden, wird mit einer Fehlermeldung abgebrochen.

Fig. 10 veranschaulicht ein weiteres Ausführungsbeispiel eines Suchpfades zur Lokalisierung des Leitstrahles und damit eine Andockvorrichtung. Auch hier wiederum gibt eine Lichtquelle LQ einen Leitstrahl BEA ab, zu dessen Suche die Einheit entlang eines zickzackförmigen Kurses P5 verfährt. Der Roboter bewegt sich im in Figur 10 dargestellten Suchmanöverbeispielsweise auf einem Zickzack-Kurs zunächst eine vorgegebene Distanz nach rechts, wie es Pfeil 1 angibt. Wird der Lichtstahl nicht gefunden, bewegt sich der Roboter auf dem gleichen Zickzack-Kurs in die andere Richtung, diesmal allerdings eine längere Distanz, wie es Pfeil 2 anzeigt. Dieses Suchen nach links und nach rechts mit wachsender Suchdistanz kann beliebig fortgesetzt werden, wie mit Pfeil 3 symbolisiert.

Wie Fig. 11 zeigt, besteht zur Lokalisierung eines Leitstrahles BEA, welcher von einer Lichtquelle LQ abgegeben wird auch die Möglichkeit auf einem mäanderförmigen Kurz P10 zu verfahren, auf dem sich die Einheit AE rückwärts in Richtung der Lichtquelle bewegt.
Wenn der Roboter schon weit vor der Dockingstation die Andockvorrichtung rückwärts anfährt, könnte er den Strahl

durch einfaches schlangenlinienförmiges Rückwärtsfahren suchen. Die Amplitude könnte natürlich wieder verändert werden. Dieses Manöver wurde noch nicht auf dem Experimentierroboter.

Die Fig. 12 und 13 veranschaulichen die Problematik bei der Verfolgung des Leitstrahles, welcher von einer Lichtquelle LQ abgegeben wird. In Fig. 12 verfährt die autonome mobile Einheit AE entlang eines Suchpfades P20, wobei sie in einem Punkt K10 den Leitstrahl aus dem Erfassungsbereich der Sensoren verliert und diesen dann wieder finden muß, um in eine Zielposition KE zu gelangen. Zu diesem Zweck veranschaulicht Fig. 13, daß es sinnvoll ist, beispielsweise eine Zwischenposition x_mittel vorzusehen, auf dem sich die autonome mobile Einheit entlang eines Kurses P30 zubewegt, da damit vermieden werden kann, daß der Leitstrahl BEA aus dem Sichtbereich der Sensoren verloren wird. Zuerst wird eine Startkonfiguration (*x_start*,0,0)) vor der Andockvorrichtung angefahren. Hierbei wird i. a. die Unsicherheit der Lokalisierung bzgl. der Position und der Orientierung so groß sein, daß der Leitstrahl noch gar nicht gesehen wird (d.h. daß der Leitstrahl die PSD Sensoren nicht trifft. Also startet der Roboter eine Suche nach dem Strahl.

Hat der Roboter den Strahl gefunden, gibt es prinzipiell zwei Möglichkeiten:

1.) Mit einem speziellen Regler versucht der Roboter dem Lichtstahl exakt bis zur Docking-Konfiguration KD zu folgen.

2.) Definition von geeigneten Zwischenkonfigurationen, die der Roboter mit einem herkömmlichen Konfigurationsregler anfährt

Wenn der Roboter mit einem Regler dem Leitstrahl exakt folgen soll, ergibt sich das Problem, daß der Roboter infolge seiner Fahrbewegungen, den Strahl wieder verlieren kann. Dies kann leicht geschehen, wie Figur 12 mit K10 zeigt, wenn der Roboter während der Strahlsuche den Stahl unter einem relativ großem Winkel von beispielsweise > 10° findet.

Das Wiederfinden des Leitstrahls ist dann mit den entsprechenden Suchstrategieen möglich. Bevorzugt kann jedoch der herkömmliche Konfigurationsregler eingesetzt werden.

Hierzu werden neben der Startkonfiguration zwei weitere Konfigurationen bestimmt. Zum einen die Mittelkonfiguration (x_middle,0,0) kurz vor der eigentlichen Docking-Konfiguration und eine Endkonfiguration (X_final,0,0), welche sich in Figur 13 direkt hinter der Docking-Konfiguration KD befindet.

Zunächst fährt der Roboter die Mittelkonfiguration an. Nach dem erfolgreichen Anfahren der Mittelkonfiguration ist der Roboter bereits exakt ausgerichtet, so daß er ohne größere Lenkausschläge und damit ohne den Stahl zu verlieren rückwärts zur Docking-Konfiguration KD fahren kann.

Kurz vor dem Erreichen der Mittelkonfiguration wird bereits das neue Ziel, die End-Konfiguration vorgegeben. Der Roboter kann vor erreichen des Ziels mittels Endschalter gestoppt werden

Wie Fig. 14 zeigt, kann ein Andockvorgang aus Schritten 100 bis 530 bestehen. Mit einem Befehl 100 wird der Befehl zum Andocken an die Andockvorrichtung gegeben. In einem Prozeß 150 fährt die autonome mobile Einheit zur Startposition in einem Schritt 130 wird der Leitstrahl gesucht, solange, bis ein Detektor den Leitstrahl erfaßt. Dies wird durch den Pfeil 170 veranschaulicht. Weiterhin ergibt sich aus Pfeil 180, daß die Startposition erreicht ist. Falls beide Detektoren schon den Leitstrahl erfassen wird Schritt 160 ausgeführt und so nach Prozeßschritt 400 gesprungen. Ansonsten erfolgt Prozeßschritt 200, in welchem die unterschiedlichen Suchpositionen, der verschiedenen Suchwegstrategien initialisiert werden. In Schritt 210 wird der Prozeßschritt 250 zur Anfahrt verschiedener Suchpositionen angestoßen. Falls die entsprechenden Positionen nicht erreicht sind, wird mit Schritt 230 zurückgesprungen. In Schritt 270 wird weitergemeldet, welche Suchposition aktuell erreicht wird und in Schritt 300 wird überprüft, welche Suchpositionen angefahren werden sollen. Falls die letzte Suchposition bereits erreicht wurde, wird über Schritt 305 der Suchvorgang abgebrochen und in Prozeßschritt 310 der Mißerfolg des Suchvorgangs festgestellt. Fall die letzte Suchposition noch nicht erreicht worden ist, wird über Schritt 320 der Prozeßschritt 350 angestoßen, welcher die Nummer der Suchposition um eine erhöht, worauf Schritt 220 erfolgt, der den Prozeß 250 erneut anstößt. Falls beide Detektoren den Leitstrahl erfaßt haben, wird Schritt 260 angestoßen, der ebenfalls Prozeß 400 auslöst. Im Prozeßschritt 400 richtet sich die Einheit exakt entlang des Leitstrahles aus. Falls dies nicht der Fall ist, wird in Prozeßschritt 430 die Position korrigiert. Falls die Mittelposition erreicht ist, wird mit Prozeßschritt 410 der Prozeß 500 angestoßen, welcher ein Anfahren der Andockposition bewirkt. Mit Prozeßschritt 530 wird die aktuelle Position überprüft und falls die Andockposition noch nicht erreicht wurde, Prozeß 500 ausgeführt. In Prozeßschritt 510 wird das Erreichen der Endposition gemeldet und in Prozeßschritt 520 der Erfolg des Andockvorgangs festgestellt.

## Patentansprüche

**1.** Verfahren zur Andockpositionierung einer autonomen mobilen Einheit (AE) an einer Andockvorrichtung mittels eines Leitstrahles (BE) und eines Leitstrahldetektors (SE) mit folgenden Schritten:

a) bei Fahrtantritt sind sowohl die Zielkoordinaten der Andockvorrichtung (AV) und deren Drehlage in einem Umweltkoordinatensystem (x,y) und damit die Ausrichtung des Leitstrahles als auch ihre eigene Position und Drehlage der autonomen mobilen Einheit (AE) im gleichen Umwelt Koordinatensystem (x,y) bekannt;
b) die seit Fahrtantritt in Richtung auf eine vorgegebene Startposition (1B) für den Andockvorgang zurückgelegte Wegstrecke wird sowohl mittels eines Entfernungsmeßsensors, der den Abstand zu eimen Hindernis in der Umgebung mißt, als auch mittels Odometrie ermittelt, wodurch sich die autonome mobile Einheit in ihrer Umgebung orientiert und daraus die Koordinaten ihrer aktuellen Position im Umweltkoordinatensystem (x,y) und die zugehörige Positionsunsicherheit (PU) berechnet;
c) die autonome mobile Einheit fährt zu der Vorgegebenen Startposition (1B) bei der sie sich bezüglich ihrerstardrehlage so ausrichtet, daß der Leitstrahldetektor (SE) den Leitstrahl nicht erfaßt;
d) die autonome mobile Einheit (AE) fährt in Richtung der Andeckvorrichtung auf einem Suchpfad, der den Leitstrahl (BEA) mindestens einmal kreuzen muß, sucht den Leitstrahl (BEA) und benutzt diesen in Verbindung mit dem Leitstrahldetektor (SE) zur Andockpositionierung.

**2.** Verfahren nach Anspruch 1, bei dem die autonome mobile Einheit (AE) für den Fall, daß es die räumlichen Gegebenheiten in Verbindung mit der Dreiradkinematik der Einheit nicht zulassen die Startkonfiguration in Form einer Startposition und einer Startdrehlage durch einfache Vorwärts- bzw. Rückwärtsfahrt und Lenken zu erreichen, zunächst die Startposition (P1) anfährt und dann eine Drehung auf der Stelle in die Startdrehlage (K3) ausführt, bzw. zuerst die Drehung auf der Stelle ausführt und dann die Startposition anfährt.

**3.** Verfahren nach einem der Ansprüche 1 oder 2, bei dem die Einheit (AE) vorwärts oder rückwärts zur Startposition fährt.

**4.** Verfahren nach einem der Ansprüche 1 bis 3, bei dem die Position der Einheit (AE) nach Erfassen des Leitstrahles (BEA) durch den Detektor (SE, PSD1, PSD2), relativ zum Leitstrahl auf Basis dessen bekannter Lage in Verbindung mit dem Leitstrahldetektor neu festlegt wird, um die Positionsunsicherheit (PU) quer zum Leitstrahl (BEA) zu minimieren.

**5.** Verfahren nach einem der Ansprüche 1 bis 4 bei dem die Einheit (AE) zur Suche des Leitstrahles (BE) auf dem Suchpfad so fährt, daß sie ihn mehrfach kreuzt.

**6.** Verfahren nach Anspruch 5, bei dem die Einheit (AE) einen mäanderförmigen Suchpfad fährt.

**7.** Verfahren nach Anspruch 6, bei dem die Wendemanöver zur Fahrt des mäanderförmigen Suchpfades sich mit dem Abstand zur vermeintlichen Position der Andockvorrichtung (AV) ändern.

**8.** Verfahren nach Anspruch 5, bei dem die Einheit (AE) zur Suche des Leitstrahles (BEA) sich zunächst auf die Andockvorrichtung (AV) zubewegt, den vermeintlichen Verlauf des Leitstrahles (BEA) kreuzt, dann ein Wegstück parallel zum vermeintlichen Verlauf des Leitstrahles fährt und anschließend diese in Richtung der Andockvorrichtung (AV) fahrend erneut kreuzt.

**9.** Verfahren nach Anspruch 4, bei dem die Einheit (AE) einen zickzackförmigen Suchpfad abfährt der quer zum vermeintlichen Verlauf des Leitstrahles verläuft und in Vörwärts-Rückwärtsfahrt ohne Wendemanöver absolviert wird.

**10.** Verfahren nach einem der vorangehenden Ansprüche, bei dem die Einheit (AE) nach Detektion des Leitstrahles (BEA) diesem unter Verwendung des Leitstrahldetektors zur Andockvorrichtung (AV) folgt.

## Claims

**1.** Method for docking positioning of an autonomous mobile unit (AE) at a docking facility by means of a guide beam (BEA) and a guide beam detector (SE), having the following steps:

a) at the start of a trip both the destination coordinates of the docking facility (AV) and the rotary position of the latter in an environmental coordinate system (x, y), and thus the alignment of the guide beam as well as its own position and the rotary position of the autonomous mobile unit (AE) in the same environmental coordinate system (x, y) are known;

b) the path distance covered for the docking operation since the start of the trip in the direction of a prescribed starting position (1B) is determined both by means of a distance measuring sensor, which measures the spacing from an obstacle in the environment, and by means of geometry, as a result of which the autonomous mobile unit is oriented in its environment, and the coordinates of its current position in the environmental coordinate system (x, y) and the associated positional uncertainty (Ph) are calculated;
c) the autonomous mobile unit drives to the prescribed starting position (1B), at which it is aligned with respect to its starting rotary position such that the guide beam detector (SE) does not detect the guide beam; and
d) the autonomous mobile unit (AE) drives in the direction of the docking facility on a search path which must cross the guide beam (BEA) at least once, searches for the light beam (BEA), and uses the latter in conjunction with the guide beam detector (SE) for the purpose of docking positioning.

2. Method according to Claim 1, in which for the case that spatial conditions in conjunction with the three-wheel kinematics of the unit do not permit the starting configuration in the form of a starting position and a starting rotary position to be achieved by simple forwards and backwards driving and steering, the autonomous mobile unit (AE) initially approaches the starting position (P1) and then executes a rotation on the spot into the starting rotary position (K3), or firstly executes the rotation on the spot and then approaches the starting position.

3. Method according to one of Claims 1 or 2, in which the unit (AE) drives forwards or backwards to the starting position.

4. Method according to one of Claims 1 to 3, in which the position of the unit (AE) after detection of the guide beam (BEA) by the detector (SE, PSD1, PSD2) is redetermined relative to the guide beam on the basis of the known position thereof in conjunction with the guide beam detector, in order to minimize the positional uncertainty (PU) transverse to the guide beam (BEA).

5. Method according to one of Claims 1 to 4, in which in order to search for the guide beam (BEA) on the search path, the unit (AE) drives so as to cross it repeatedly.

6. Method according to Claim 5, in which the unit (AE) drives along a meandering path.

7. Method according to Claim 6, in which the turning manoeuvres for driving along the meandering search path change with the spacing from the presumed position of the docking facility (AV).

8. Method according to Claim 5, in which in order to search for the guide beam (BEA), the unit (AE) initially moves up to the docking facility (AV), crosses the presumed course of the guide beam (BEA), then drives along a path segment parallel to the presumed course of the guide beam, and subsequently recrosses the latter, driving in the direction of the docking facility (AV).

9. Method according to Claim 4, in which the unit (AE) covers a zigzag search path which runs transverse to the presumed course of the guide beam and is traversed in a fashion driving forwards and backwards without turning manoeuvres.

10. Method according to one of the preceding claims, in which after detection of the guide beam (BEA) the unit (AE) follows the latter to the docking facility (AV) with the use of the guide beam detector.

**Revendications**

1. Procédé pour le positionnement à quai d'une unité mobile autonome (AE) sur un dispositif de mise à quai au moyen d'un rayon de guidage (BEA) et d'un détecteur de rayon de guidage (SE) avec les étapes suivantes :

a) au démarrage, aussi bien les coordonnées d'arrivée du dispositif de mise à quai (AV) et sa position angulaire dans un système de coordonnées monde (x, y) et donc l'orientation du rayon de guidage que sa position propre et sa position angulaire sont connues de l'unité mobile autonome (AE) dans le même système de coordonnées monde (x, y) ;
b) le trajet parcouru depuis le démarrage en direction d'une position de départ prédéterminée (1B) pour l'opération de mise à quai est déterminé aussi bien au moyen d'un capteur de mesure de distance qui mesure la distance à un obstacle dans l'environnement qu'au moyen de l'odométrie, ce qui fait que l'unité mobile autonome s'oriente dans son environnement et calcule à partir de là les coordonnées de sa position actuelle dans le système de coordonnées monde (x, y) et l'incertitude de position (PU) associée ;
c) l'unité mobile autonome se déplace vers la position de départ prédéterminée (1B) dans laquelle elle s'oriente par rapport à sa position angulaire de départ de telle sorte que le détecteur de rayon de guidage (SE) ne détecte pas le rayon de guidage ;
d) l'unité mobile autonome (AE) se déplace en direction du dispositif de mise à quai sur un chemin de recherche qui doit croiser au moins une fois le rayon de guidage (BEA), elle cherche le rayon de guidage (BEA) et elle utilise celui-ci en liaison avec le détecteur de rayon de guidage (SE) pour le positionnement à quai.

**2.** Procédé selon la revendication 1, dans lequel l'unité mobile autonome (AE), pour le cas où les caractéristiques spatiales en liaison avec la cinématique à trois roues de l'unité ne permettent pas d'atteindre la configuration de départ sous la forme d'une position de départ et d'une position angulaire de départ par de simples déplacements en avant, en arrière et tournants, s'approche d'abord de la position de départ (P1) et effectue ensuite une rotation sur place dans la position angulaire de départ (K3), ou effectue d'abord la rotation sur place et s'approche ensuite de la position de départ.

**3.** Procédé selon l'une des revendications 1 ou 2, dans lequel l'unité (AE) se déplace en avant ou en arrière jusqu'à la position de départ.

**4.** Procédé selon l'une des revendications 1 à 3, dans lequel la position de l'unité (AE) après la détection du rayon de guidage (BEA) par le détecteur (SE, PSD1, PSD2) est de nouveau déterminée relativement au rayon de guidage sur la base de la position connue de celui-ci en liaison avec le détecteur de rayon de guidage pour minimiser l'incertitude de position (PU) transversalement au rayon de guidage (BEA).

**5.** Procédé selon l'une des revendications 1 à 4, dans lequel l'unité (AE) à la recherche du rayon de guidage (BEA) se déplace sur le chemin de recherche de telle sorte qu'elle le croise plusieurs fois.

**6.** Procédé selon la revendication 5, dans lequel l'unité (AE) se déplace sur un chemin de recherche méandreux.

**7.** Procédé selon la revendication 6, dans lequel les manoeuvres de virage pour le déplacement sur le chemin de recherche méandreux varient avec la distance à la position présumée du dispositif de mise à quai (AV).

**8.** Procédé selon la revendication 5, dans lequel l'unité (AE) à la recherche du rayon de guidage (BEA) se déplace d'abord vers le dispositif de mise à quai (AV), croise le trajet présumé du rayon de guidage (BEA), se déplace ensuite un peu parallèlement au trajet présumé du rayon de guidage et croise ensuite de nouveau celui-ci en allant en direction du dispositif de mise à quai (AV).

**9.** Procédé selon la revendication 4, dans lequel l'unité (AE) se déplace sur un chemin de recherche en zigzag qui s'étend transversalement au trajet présumé du rayon de guidage et elle effectue ce parcours en allant en avant et en arrière mais sans manoeuvre de virage.

**10.** Procédé selon l'une des revendications précédentes, dans lequel l'unité (AE) après la détection du rayon de guidage (BEA) suit celui-ci en utilisant le détecteur de rayon de guidage jusqu'au dispositif de mise à quai (AV).

FIG 1

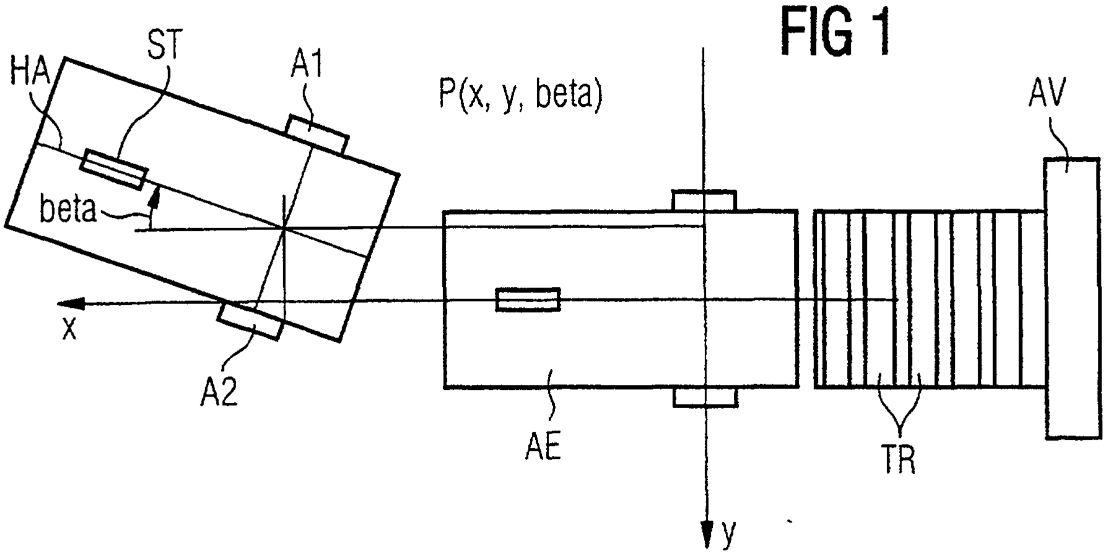
HA
ST
A1
P(x, y, beta)
AV
beta
x
A2
AE
TR
y

FIG 2

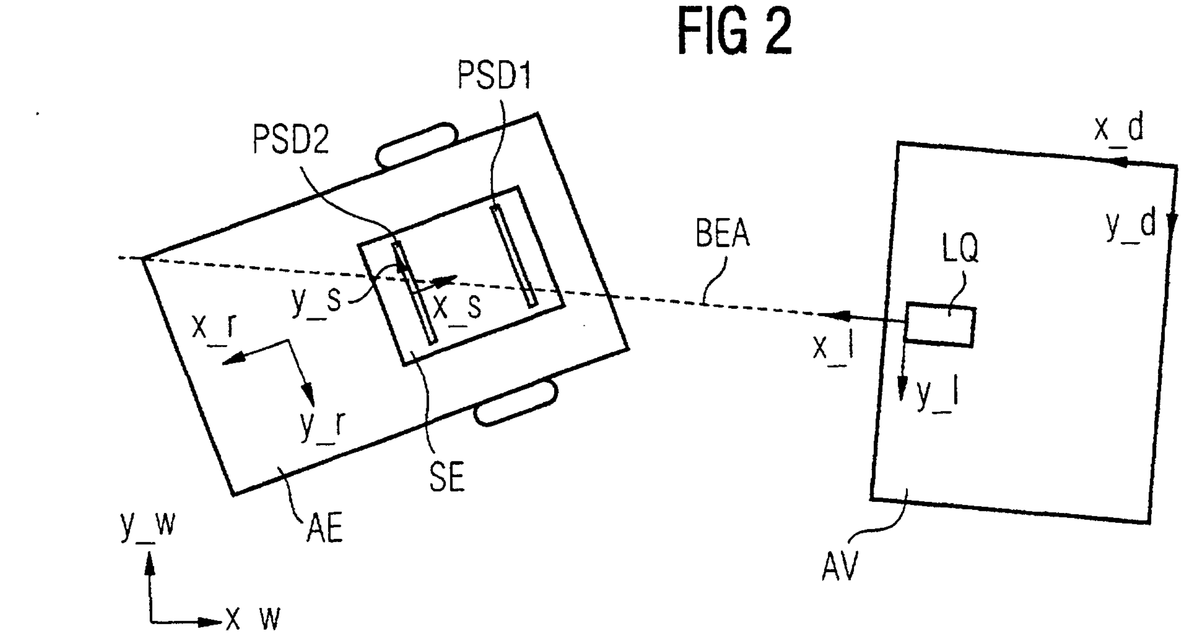
PSD1
PSD2
x_d
BEA
y_d
LQ
y_s
x_s
x_r
x_l
y_l
y_r
SE
y_w
AE
AV
x_w

FIG 3

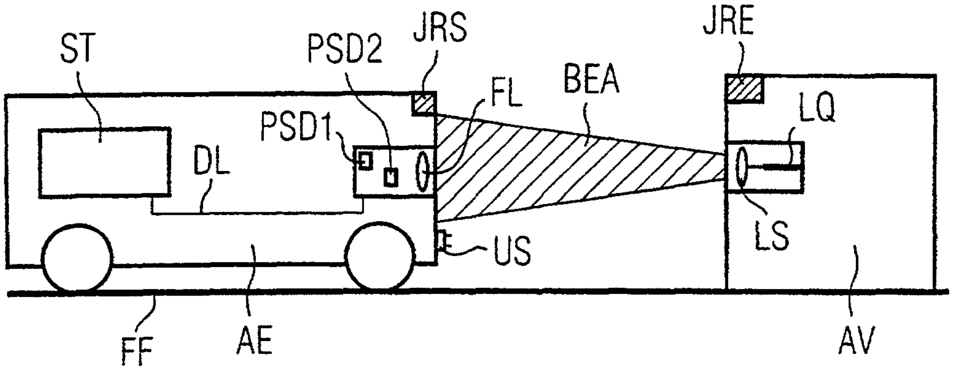
ST
PSD2
JRS
JRE
PSD1
FL
BEA
LQ
DL
LS
US
AV
FF
AE

FIG 4

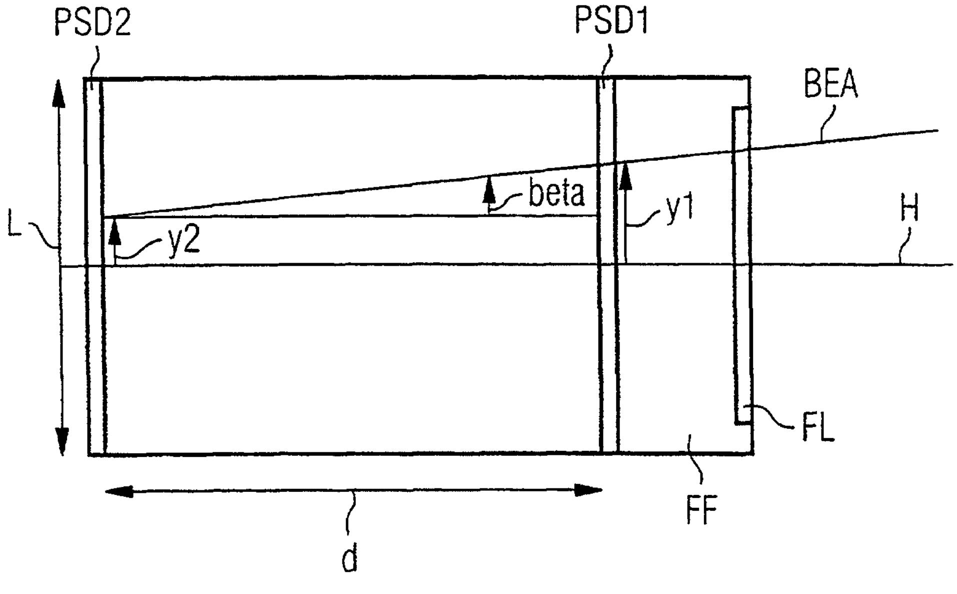
PSD2
PSD1
BEA
beta
y1
L
y2
H
FL
FF
d

FIG 5

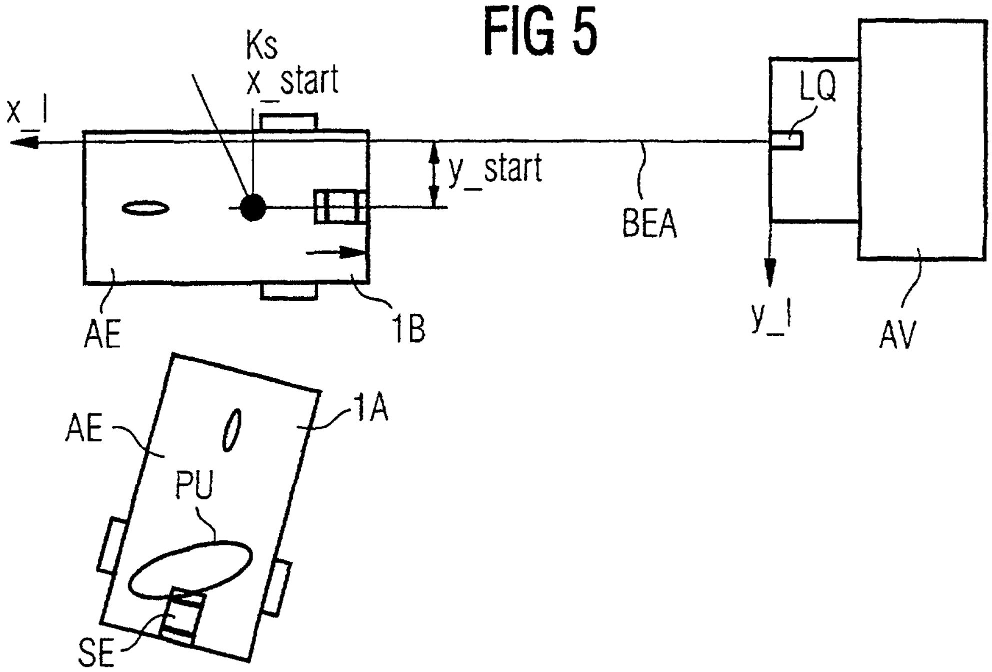
Ks
x_start
x_I
y_start
BEA
LQ
AE
1B
y_I
AV
AE
1A
PU
SE

FIG 7

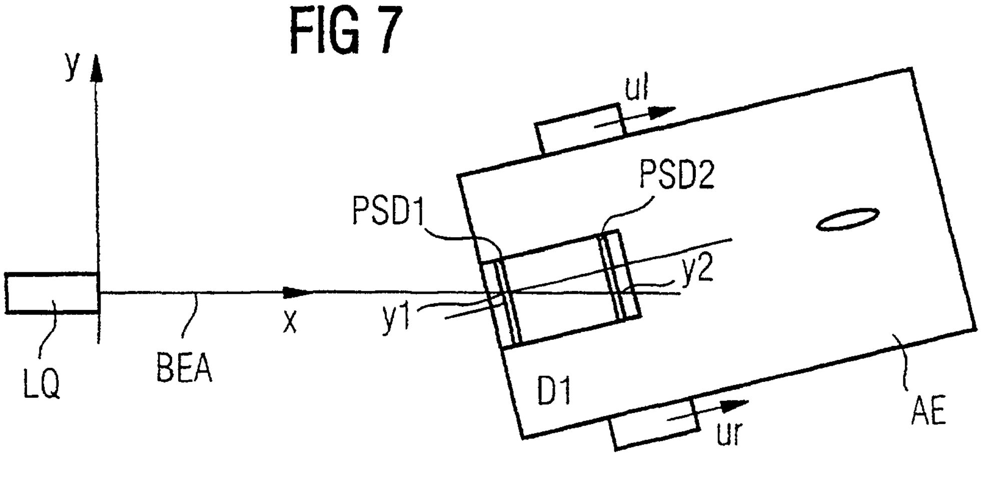
y
ul
PSD2
PSD1
y2
LQ
BEA
x
y1
D1
ur
AE

FIG 6

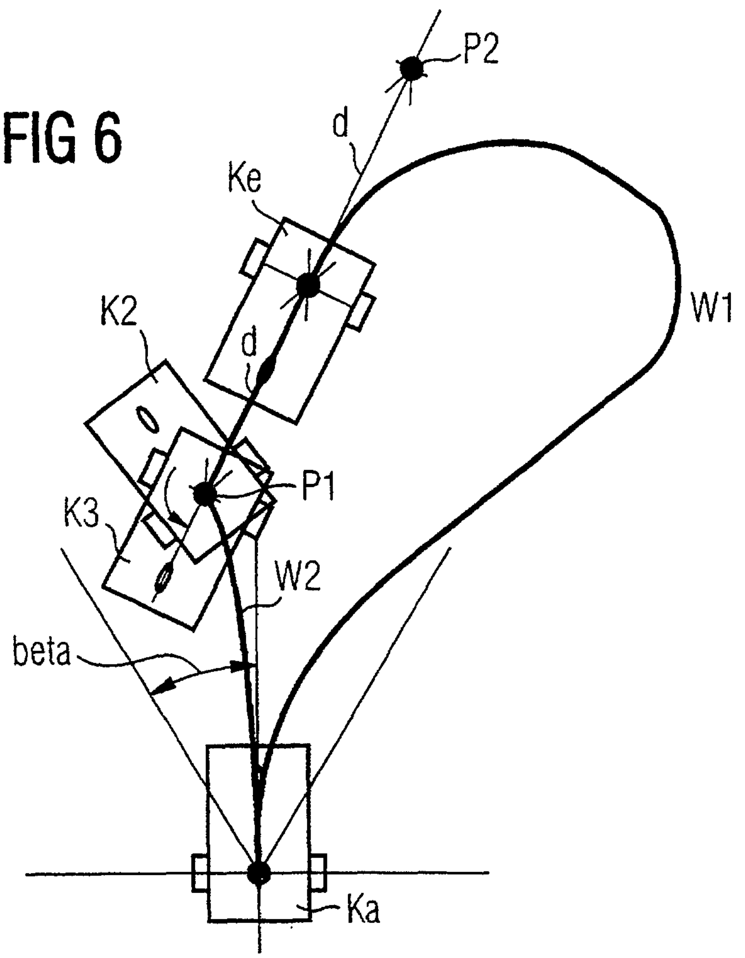
P2
d
Ke
W1
K2
d
P1
K3
W2
beta
Ka

FIG 9

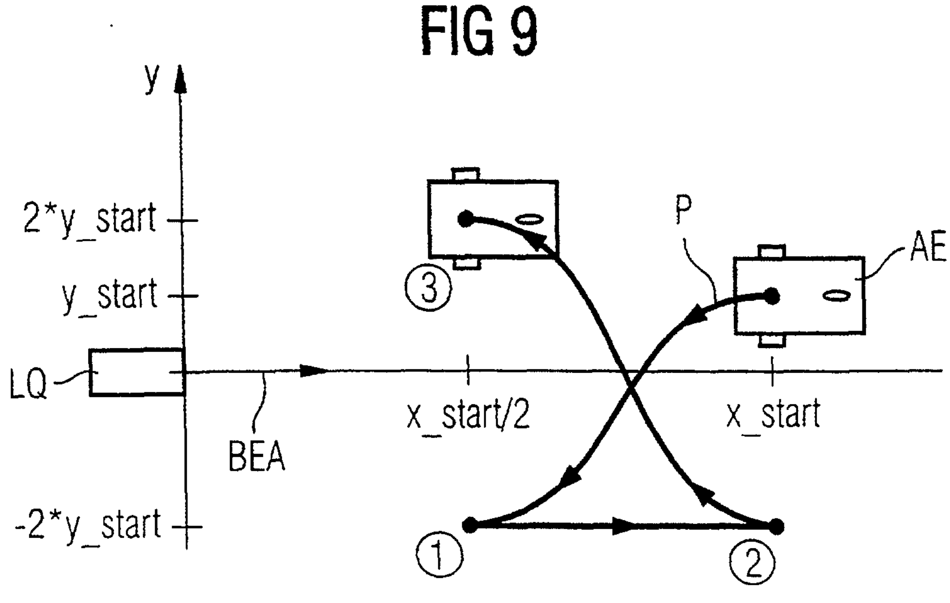
y
2*y_start
y_start
LQ
BEA
x_start/2
x_start
-2*y_start
P
AE
3
1
2

FIG 8

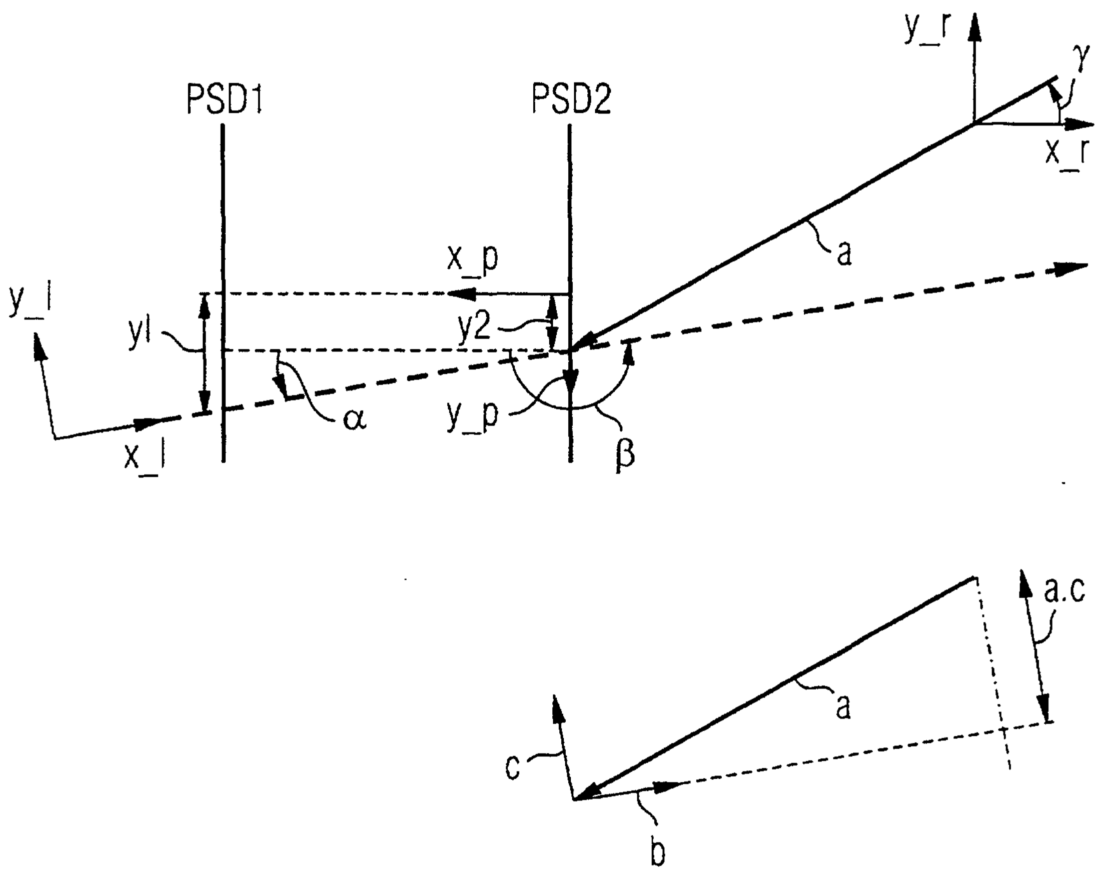

FIG 10

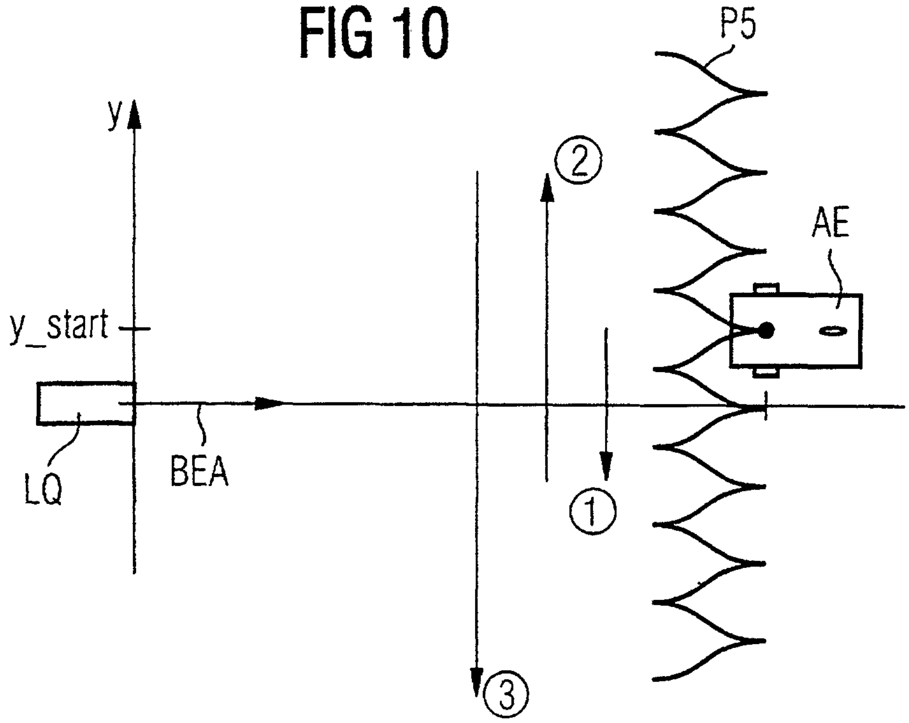


FIG 11

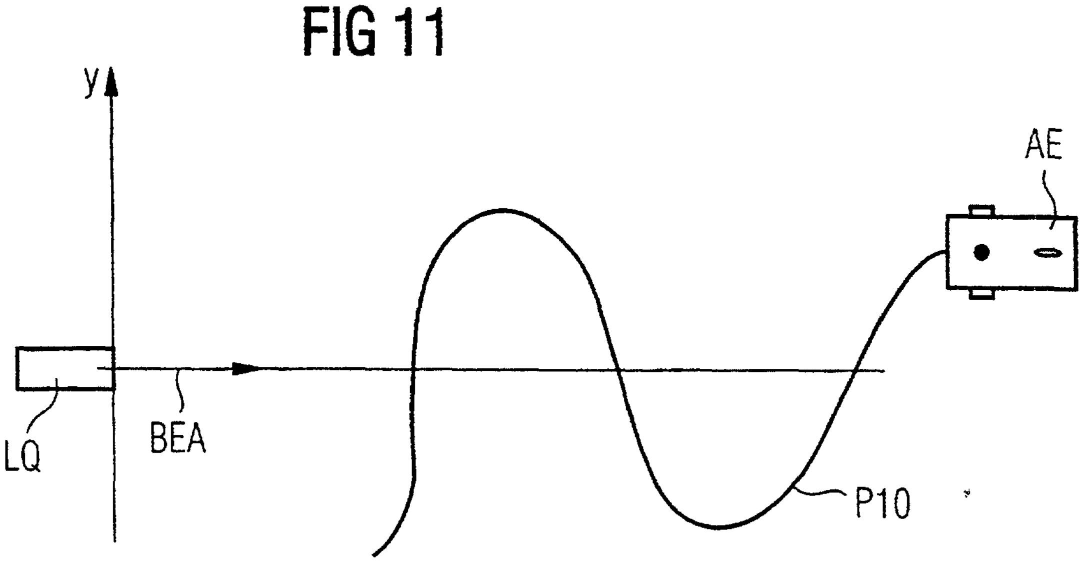

FIG 12

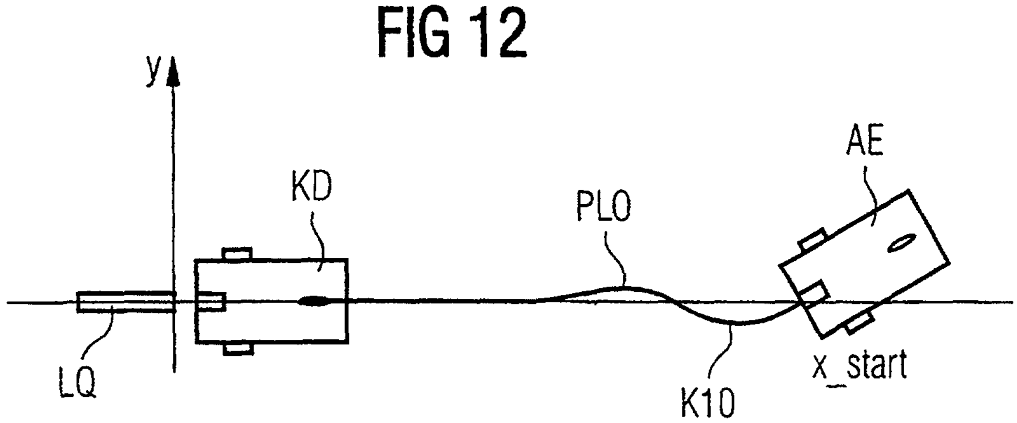
y
KD
PLO
AE
LQ
K10
x_start

FIG 13

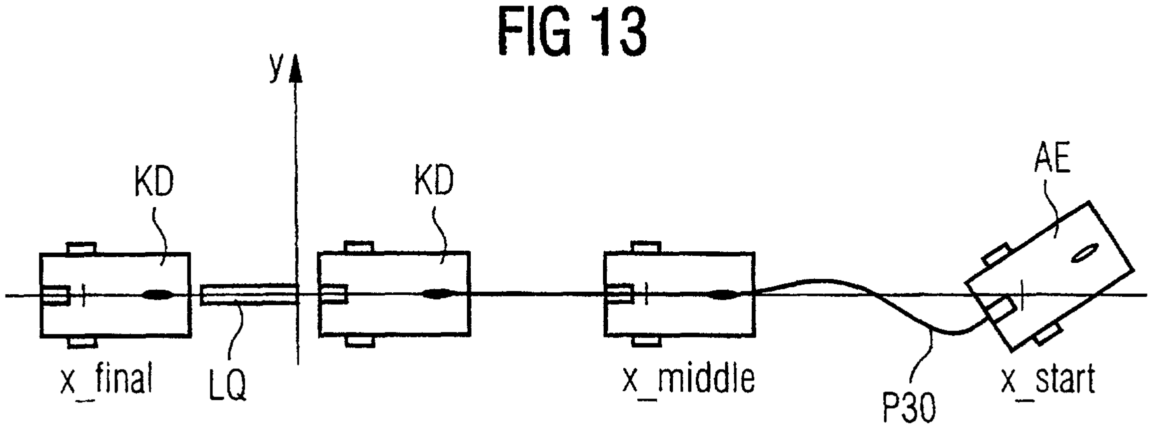
y
KD
KD
AE
x_final
LQ
x_middle
P30
x_start

FIG 14

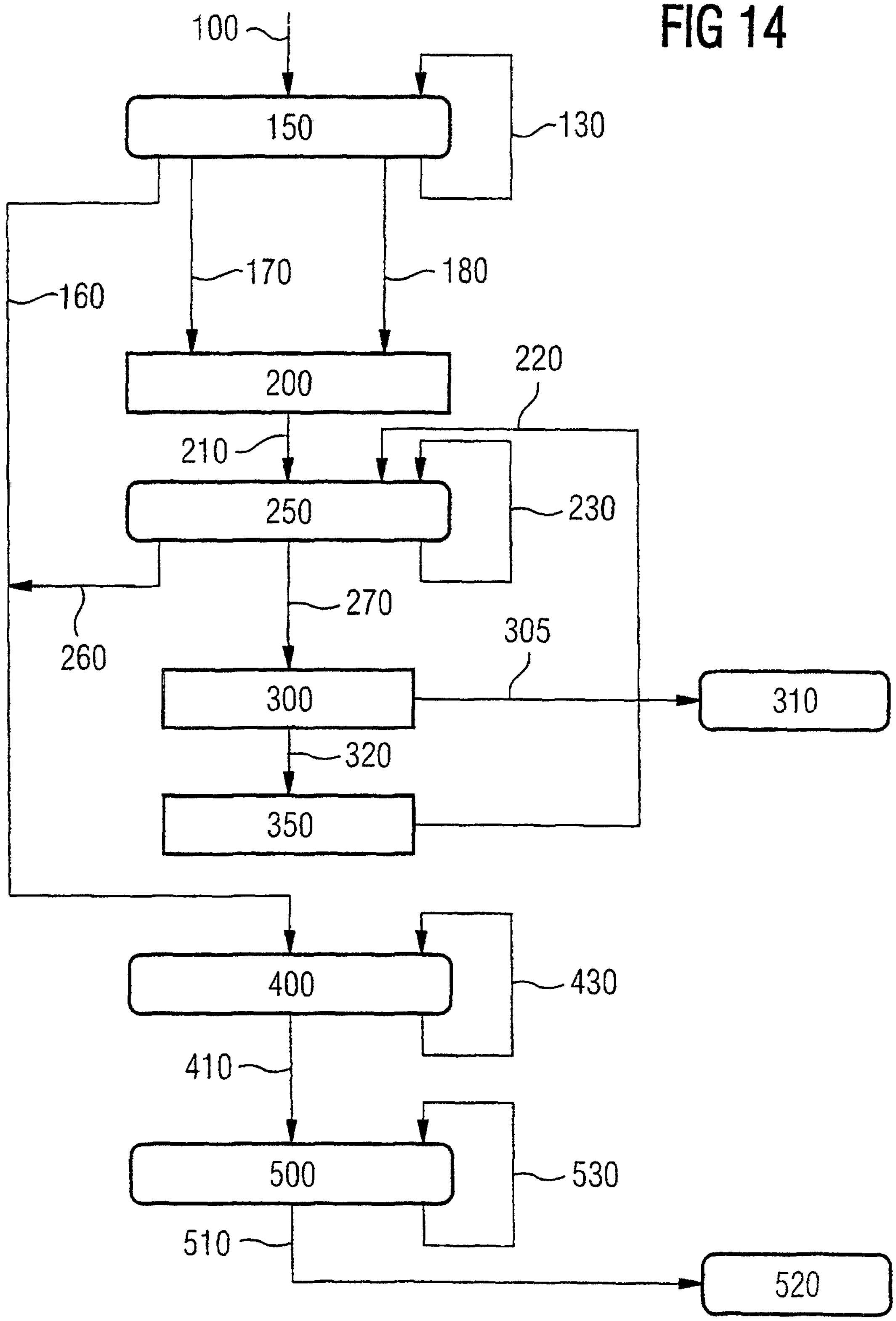
100
150
130
160
170
180
200
220
210
250
230
260
270
305
300
310
320
350
400
430
410
500
530
510
520